(19) Europäisches Patentamt
European Patent Office
Office européen des brevets

(11) **EP 4 424 522 B1**

(12) **EUROPEAN PATENT SPECIFICATION**

(45) Date of publication and mention
of the grant of the patent:
**18.03.2026 Bulletin 2026/12**

(21) Application number: **22886363.5**

(22) Date of filing: **06.05.2022**

(51) International Patent Classification (IPC):
**B60C 11/03** (2006.01)     **B60C 11/12** (2006.01)

(52) Cooperative Patent Classification (CPC):
**B60C 11/1236;** B60C 11/0306; B60C 2011/1254

(86) International application number:
**PCT/JP2022/019600**

(87) International publication number:
**WO 2023/074026 (04.05.2023 Gazette 2023/18)**

(54) **TIRE**

REIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.10.2021 JP 2021176996**

(43) Date of publication of application:
**04.09.2024 Bulletin 2024/36**

(73) Proprietor: **BRIDGESTONE CORPORATION
Chuo-ku
Tokyo 104-8340 (JP)**

(72) Inventors:
• **MATSUMOTO, Hiroyuki
Tokyo 104-8340 (JP)**

• **KAJI, Yoshio
Tokyo 104-8340 (JP)**
• **NOMURA, Hiroshi
Tokyo 104-8340 (JP)**

(74) Representative: **Marks & Clerk LLP
15 Fetter Lane
London EC4A 1BW (GB)**

(56) References cited:
WO-A1-2022/050287     JP-A- 2000 289 413
JP-A- 2010 052 683     JP-A- 2011 245 903
JP-A- 2011 245 963     JP-A- 2021 165 110
JP-A- H06 191 234     JP-B1- S5 211 084
US-A- 3 749 145     US-A1- 2002 007 889

**Description**

TECHNICAL FIELD

This invention relates to a tire.

BACKGROUND

Conventionally, tires that have improved with on-ice gripping performance by arranging sipes at a high density while controlling a decrease in rigidity, are known (for example, Patent Document 1).

JP H06 191234 A relates to a pneumatic radial tire for heavy load having an openlug type pattern with plural blocks provided at the tread, the block is provided with one set or more of sipe cluster part with two or more closed sipes, extended in the tire width direction, as one set. The positions of the closed sipes in each set are mutually shifted in both width direction and circumferential direction of the tire. The circumferential offset quantity is to be 3-10mm, and the width direction offset quantity is to be within + or -3mm.

JP 2011 245903 A relates to a pneumatic tire having a main groove, a land part, a plurality of the open sipes, and a plurality of the closed sipes. The main groove is continuously formed along a circumferential direction of the tire on the surface of a tread. The land part is partitioned with the main groove. The plurality of the open sipes are arranged along the circumferential direction of the tire on an end contacted with the main groove of the land part. The plurality of the closed sipes are arranged in the land part. The plurality of the open sipes arranged in a first zone of the land part on which the closed sipes is arranged in the circumferential direction of the tire are smaller in the sum of a sipe volume per length in a unit circumferential direction than the plurality of the open sipes arranged in a second zone of the land part on which the closed sipes is not arranged in the circumferential direction of the tire.

JP 2010 052683 A relates to a pneumatic tire having a thin groove-like sipe having at least one end part closed in a land part on a tread of a land part formed on a tread part. The sipe has an end part area having a closed end part and the other body area, and depth of the end part area is formed shallower than that of the body area. Depth C of the end part area is set to a range of $0.30 \leq C/B \leq 1.40$ relative to length B of the end part area.

JP 2000 289413 A relates to a tread pattern made of blocks with sipes on the surface. Sipes are arranged densely near the block center section, and sipes are arranged coarsely near the block edge section. Sipes may be radially arranged from the block center section to the block edge section in this arrangement. When sipes are radially arranged and are opened at the block edge section, the water sucked by the sipes is discharged to main grooves and auxiliary grooves from the block edge section, and the draining effect can be further increased.

US 3 749 145 A relates to a pneumatic tire having a breaker, particularly of steel cord fabric and circumferential tread ribs provided with transverse slots extending across the whole or a major portion of the rib width to separate areas of tread rubber which will interlock to resist a sideways force applied to the tire.

JP S52 11084 B1 relates to a tyre with a tread, which comprises ribs or blocks defining a groove, and which is formed with slots in the ribs deeper than the groove. The slots open only to the ground-contacting portion of the tread and the slot walls do not contact each other in the normal inflated condition of the tyre and have a depth in the range from 1 millimetre below the groove's bottom to the midpoint between the groove's bottom and the tyre's outermost ply. The bottom of each slot may be bulbous, and of circular cross-section.

US 2002/007889 A1 relates to pattern blocks in the tread of a vehicle tire, the tread comprising the tread layer on the tire carcass and on that pattern blocks separated from each other by wider grooves. At least part of these pattern blocks comprise fine slits, which are substantially narrower than the grooves, each slit comprising within the area of the pattern block at least one bend or at least one end. Two adjacent slits form surface tear points, each of which is formed of: webs between at least one end of one slit and at least one second slit or its end; or webs between the bend of one slit and one second slit or its bend. The web width of the webs is at most five times the slit width, and the adjacent slits restrict between their mutual webs between them nubs inside the pattern block.

JP 2021 165110 A relates to a tire in which at least one land part is formed in a divided manner on a tread surface, and a plurality of short sipes, in which a length along an extension direction is 5% or less of a grounding width, are formed on the land part. The short sipe is terminated within the land part. In regard to the two short sipes between which the shortest distance is minimized, a distance between the centers of minimum circumscribed circles including the two short sipes, respectively, is in the range of 1.00-1.15 times of the shortest distance. When D represents a tire-width-direction distance between both grounding ends, the plurality of short sipes are formed within a tire-width-direction range of $0.35 \times D$ or less toward each side toward the side of a tire equator line from at least one of the ground ends.

WO 2022/050287 A1 relates to a tire having a tread part. The tread part includes a land portion. A plurality of closed sipes are arranged in a tire axial direction in the land portion. Each of the closed sipes includes: a first end and a second end; a first sipe piece extending from the first end side in the tire axial direction; a second sipe piece extending from the second end side in the tire axial direction; and a third sipe piece inclined with respect to the tire axial direction between the first sipe piece and the second sipe piece. The closed sipes arranged in the tire axial direction overlap each other in the tire axial direction.

JP 2011 245963 A relates to a pneumatic tire having a tread construction suitable for suppressing steering-pull of a vehicle.

CITATION LIST

Patent Literature

PTL 1: JP 2005-186827 A1

SUMMARY

(Technical Problem)

However, in Patent Document 1, the control of rigidity reduction and the high-density arrangement of the sipes were not sufficiently balanced, and there was still room for improvement in on-ice gripping performance.

It is therefore an object of the present invention to provide a pneumatic tire with improved on-ice gripping performance.

(Solution to Problem)

The gist structure of the invention is as follows.

A tire having at least one land portion on a tread surface of the tire, wherein

at least one of the land portions comprises at least one sipe unit consisting of a pair of sipes,
both ends of each of one sipe and the other sipe constituting the pair of sipes terminates in the land portion,
the one sipe and the other sipe are arranged opposing each other in the tire circumferential direction and have long sides extending in the tire width direction, respectively,
the one sipe has a short side extending from either end of the long side in the tire width direction to approach the other sipe side, and the other sipe has a short side extending from the other end of the long side in the tire width direction to approach the one sipe side,
wherein in each of the one sipe and the other sipe, an angle between the long side and the short side is 90° or more on the side where the one sipe and the other sipe face each other,
wherein in each of the one sipe and the other sipe, the short side extends along the tire circumferential direction such that the short side is parallel to the tire circumferential direction or inclined at an angle of 5° or less with respect to the tire circumferential direction, and
wherein a sipe density, SD, in a block land portion (5) of the land portion (3) is 0.15 or more,
the SD defined by the equation $SD = ((d \times n/BW) + 1)/BL$, where d is a length of the sipes, n is a total number of sipes in the block land portion, BW is a maximum length of the block land portion in the tire width direction, and BL is an equivalent length of the block land portion in the tire circumferential direction.

(Advantageous Effect)

According to the present invention, it is possible to provide a pneumatic tire with improved on-ice gripping performance.

BRIEF DESCRIPTION OF THE DRAWINGS

In the accompanying drawings:

FIG. 1 schematically illustrates a developed view of the tread surface of a tire according to one embodiment of this invention;
FIG. 2 illustrates an enlarged view of the sipe unit in FIG. 1;
FIG. 3A is an illustration for explaining an arrangement of sipe units in FIG. 1;
FIG. 3B is an illustration for explaining another example of an arrangement of sipe units;
FIG. 4 illustrates an enlarged view of one of the block land portions in FIG. 1;
FIG. 5A illustrates a Comparative Example of a block land portion;

FIG. 5B illustrates a Comparative Example of a block land portion;
FIG. 5C illustrates a Comparative Example of a block land portion;
FIG. 5D illustrates an Example of a block land portion;
FIG. 5E illustrates an Example of a block land portion;
FIG. 5F illustrates an Example of a block land portion; and
FIG. 6 is a graph providing the block rigidity and the actual footprint area in the Comparative Examples and Examples illustrated in Figures 5A to 5F.

DETAILED DESCRIPTION

Hereinafter, embodiments of a tire(s) according to the present invention will be described by way of example with reference to the drawings. Common components in each figure are given the same reference numerals.

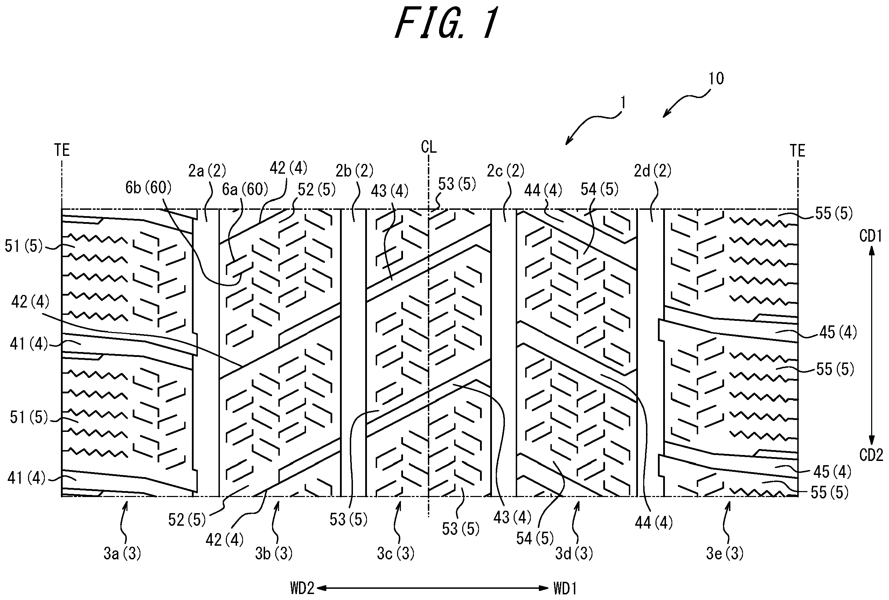

Figure 1 schematically illustrates a developed view of the tread surface of a tire according to one embodiment of this invention.

In this document, the term "tread surface (1)" means the outer circumferential surface of the tire that is in contact with the road surface when the tire is assembled on a rim, filled with prescribed internal pressure, and rolled under a maximum load.

In addition, the term "tread edge (TE)" means the outer edge of the tread surface in the tire width direction.

As used herein, the term "applicable rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States (That is, the "applicable rim" includes current sizes as well as future sizes to be listed in the aforementioned industrial standards.). An example of the "size as may be described in the future" could be the sizes listed as "FUTURE DEVELOPMENTS" in the ETRTO's STANDARDS MANUAL 2013 edition. For sizes not listed in these industrial standards, the term "applicable rim" refers to a rim with a width corresponding to the bead width of the tire.

In addition, the term "prescribed internal pressure" refers to the air pressure (maximum air pressure) corresponding to the maximum load capacity of a single wheel in the applicable size and ply rating, as described in the aforementioned JATMA YEAR BOOK and other industrial standards. In the case that the size is not listed in the aforementioned industrial standards, the term "prescribed internal pressure" refers to the air pressure (maximum air pressure) corresponding to the maximum load capacity specified for each vehicle in which the tire is mounted.

The term "maximum load" refers to the load corresponding to the above maximum load capacity.

Note, that the air as used herein can be replaced by inert gas such as nitrogen gas or other inert gas.

Unless otherwise noted herein, the dimensions of each element, such as grooves, sipes, block land portions, etc., shall be measured in the "reference condition" described below. The term "reference condition" refers to the condition in which the tire is assembled on the rim, filled with the above prescribed internal pressure, and unloaded. The dimensions of each element in the tread surface, such as grooves, sipes, and block land portions, etc., shall be measured in the developed view of the tread surface. Herein, the term "developed view of the tread surface" refers to a planar view of the tread surface with the tread surface developed on a flat surface.

In this document, the "groove width" shall be measured in a cross-section perpendicular to the extending direction of the grooves at the tread surface, parallel to the tread surface, in the above reference condition. The groove width may be constant or variable in the direction perpendicular to the tread surface. However, in this document, unless otherwise specified, the "groove width" refers to the groove width on the tread surface. The "groove depth" herein shall be measured in the direction perpendicular to the tread surface in the above reference condition.

In this document, the term "sipe" refers to a sipe whose width is 1 mm or less over a region of 50% or more of the sipe depth in the above reference condition. The sipe width is preferably 0.6 mm or less. Here, the "sipe depth" shall be measured perpendicular to the tread surface in the above condition, and the "sipe width" shall be measured in a cross-section perpendicular to the extending direction of the sipes at the tread surface, parallel to the tread surface, in the above reference condition. The sipe width may be constant or variable in the direction perpendicular to the tread surface.

In this document, the term "length of the short side along the extending direction thereof" of a sipe and the term "length of the long side along the extending direction thereof" of a sipe refer to the length of the centerline connecting the center points in the sipe width direction. The distance between each component of each sipe, etc., shall also be measured in the developed view of the tread surface with respect to the above centerline, unless otherwise noted.

In this document, for convenience, one side in the tire circumferential direction (the upper side in Figure 1) is referred to as the "tire circumferential direction CD1 side" and the other side in the tire circumferential direction (the lower side in Figure 1) as the "tire circumferential direction CD2 side". Also, in this document, for convenience, one side in the tire width direction (right side in Figure 1) is referred to as "tire width direction WD1 side" and the other side in the tire width direction (left side in Figure 1) as "tire width direction WD2 side".

The tire 10 according to one embodiment of this invention has at least one land portion on the tread surface 1. In the example illustrated in Figure 1, the tire 10 of this embodiment has a plurality (four in the example illustrated) of circumferential main grooves 2 (2a, 2b, 2c, and 2d) extending in the tire circumferential direction on the tread surface 1. Each circumferential main groove 2 may extend in a substantially straight line along the tire circumferential direction, as illustrated in Figure 1, or it may extend circumferentially in a zigzag or wavy shape, etc.

The groove width of each circumferential main groove 2 is not limited, but can be 4 to 15 mm, for example. Also, the depth of the circumferential main groove 2 is not limited, but can be 6 to 20 mm, for example.

In addition, the tire 10 of this embodiment has a plurality (five in the illustrated example) of land portions 3 (3a, 3b, 3c, 3d and 3e) defined by the circumferential main grooves 2a, 2b, 2c and 2d and the tread edges TE on the tread surface 1.

In this embodiment, each land portion 3 is divided into a plurality of block land portions 5 by a plurality of lateral grooves 4 extending in a direction that intersects the tire circumferential direction, respectively. In the example illustrated in Figure 1, the land portion 3a has a plurality of block land portions 51, which are divided by the lateral grooves 41 and arranged along the tire circumferential direction. The land portion 3b has a plurality of block land portions 52, which are divided by the lateral grooves 42 and arranged along the tire circumferential direction. The land portion 3c has a plurality of block land portions 53, which are divided by the lateral grooves 43 and arranged along the tire circumferential direction. The land portion 3d has a plurality of block land portions 54, which are divided by the lateral grooves 44 and arranged along the tire circumferential direction. The land portion 3e has a plurality of block land portions 55, which are divided by the lateral grooves 45 and arranged along the tire circumferential direction.

Note, that each land portion 3 can be a rib-shaped land portion that is not defined by lateral grooves.

The groove width of each lateral groove 4 is not limited, but can be 2 to 10 mm, for example. Also, the groove depth of each lateral groove 4 is not limited, but can be 5 to 20 mm, for example.

In this embodiment, at least one sipe unit 60 comprising a pair of sipes 6a and 6b (hereinafter referred to as one sipe 6a and the other sipe 6b, or simply sipes 6a and 6b) is disposed in at least one of the land portions, or in each block land portion 5 in the illustrated example. In the example illustrated in Figure 1, the block land portions 52, 53, and 54 have 12 sipe units each, and the block land portions 51 and 55 have 6 sipe units respectively.

Note, that the tread surface 1 of the tire 10 of this embodiment is not limited to the example in Figure 1, and may have any tread pattern as long as it has a sipe unit 60 comprising a pair of sipes 6a and 6b.

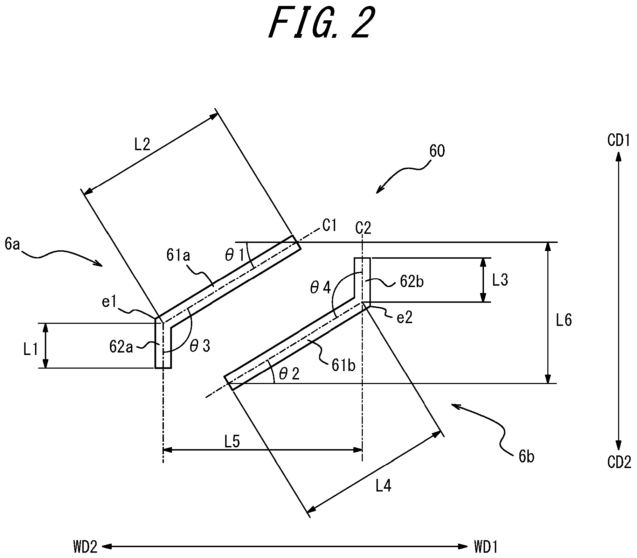

The sipe unit 60 in the tire 10 of this embodiment is described in detail with reference to Figure 2. Figure 2 illustrates an enlarged view of the sipe unit 60 in Figure 1.

As illustrated in Figure 2, the one sipe 6a and the other sipe 6b constituting the sipe unit 60 consisting of a pair of sipes, each terminate at both ends in the land portion (in this embodiment, in the block land portion 5).

In this embodiment, the one sipe 6a and the other sipe 6b are arranged opposing each other in the tire circumferential direction and have long sides extending in the tire width direction, respectively. In this embodiment, the one sipe 6a and the other sipe 6b each have a long side that extends at an angle with respect to the tire width direction, so that it goes toward one side in the tire circumferential direction as it goes toward one side in the tire width direction. More specifically, as illustrated in Figure 2, the one sipe 6a and the other sipe 6b are spaced apart from each other and arranged with at least a portion (in this example, a portion) of each of them facing each other in the tire circumferential direction. In addition, as illustrated in Figure 2, the one sipe 6a has a long side 61a that extends at an angle with respect to the tire width direction, so that it goes toward the tire circumferential direction CD1 side as it goes from the tire width direction WD2 toward the tire width direction WD1. The other sipe 6b has a long side 61b that extends at an angle with respect to the tire width direction, so that it goes toward the tire circumferential direction CD1 side as it goes from the tire width direction WD2 toward the tire width direction WD1. In this way, both long sides 61a and 61b are inclined and extend rightward on the paper by sloping toward the tire circumferential direction CD1 side as it goes from the tire width direction WD2 side toward the tire width direction WD1 side.

Here, in this document, "extending in the tire width direction" means extending with at least a tire width direction component. That is, "extending in the tire width direction" means that it may extend in a direction along the tire width direction (i.e., at an angle of 0° with respect to the tire width direction and without inclination to the tire width direction) or may extend at an angle with respect to the tire width direction (i.e., at an angle of more than 0° with respect to the tire width direction and with inclination to the tire width direction).

In the illustrated example, the long sides 61a and 61b have the same inclination angles θ1 and θ2 relative to the tire width direction and are inclined at the same angle, but they may be inclined at different angles.

The one sipe 6a has a short side 62a extending from the end e1 of either side (the tire width direction WD2 side in the example illustrated in the figure) of the long side 61a in the tire width direction to approach the other sipe 6b side. As illustrated in Figure 2, the short side 62a extends toward the side where the one sipe 6a and the other sipe 6b face each other to form a folding angle θ3 with the long side 61a.

The other sipe 6b has a short side 62b extending from the end e2 of the other side of the either side (the tire width direction WD1 side in the example illustrated in the figure) of the long side 61b in the tire width direction to approach the other sipe 6a side. As illustrated in Figure 2, the short side 62b extends toward the side where the one sipe 6a and the other sipe 6b face each other to form a folding angle θ4 with the long side 61b.

Note, that in the one sipe 6a and the other sipe 6b, the short sides do not extend from the end of either side of the long sides 61a and 61b in the tire width direction where the short sides 62a and 62b described above are not provided.

The following is an explanation of the effects of the tire configuration of the first embodiment.

The one sipe 6a and the other sipe 6b terminate at both ends within the land portion (within the block land portion 5 in this embodiment), respectively, thereby preventing the formation of open ends of the sipes at the edges of the block land portion 5 and leaving the land portion connected around the ends of the sipes 6a and 6b. This increases the rigidity of the block land portion compared to the case where the sipes are open to the edge(s) of the block land portion. In this way, the block land portion 5 can improve on-ice performance because deformation thereof is controlled, lifting on the tread surface is prevented, and the actual footprint area with the road surface can be increased.

Also, in this embodiment, the sipes 6a and 6b are arranged opposing each other in the tire circumferential direction and have long sides 61a and 61b that extend at an angle with respect to the tire width direction, so that it goes toward one side in the tire circumferential direction as it goes toward the one side in the tire width direction, thereby the edge component of the long sides not only provides sufficient braking and driving force in the tire circumferential direction (front-back direction), but also contributes to improved lateral grip performance in the tire width direction. In particular, by setting the inclination angles θ1 and θ2 to 45° or less, the component in the tire width direction of the long side of the sipes becomes equal to or greater than the component in tire circumferential direction, which contributes to the improvement of braking and driving force, the most important factor for safety.

In this embodiment, the sipes 6a and 6b have short sides 62a and 62b extending from the long sides 61a and 61b, respectively, toward the side where the one sipe 6a and the other sipe 6b face each other. According to this configuration, when a thin metal plate (blade) is used in the mold to form a sipe in the manufacturing process of the tire 10, since the short side of the blade provides support for the long side against folding deformation that causes the long side of the blade to collapse, the bending rigidity of the blade can be greatly increased to improve blade durability and tire productivity.

As described above, according to this embodiment, it is possible to increase land rigidity (and thus actual footprint area) while maintaining sipe density, i.e., to achieve both land rigidity and high-density sipe arrangement, thereby improving on-ice gripping performance.

The following is a description of suitable configurations and variations in the tire 10 of this embodiment.

In this tire 10, the sipe depth of the one sipe 6a and the other sipe 6b is not particularly limited, but from the viewpoint of more effectively improving on-ice gripping performance, it is preferably 3 mm or more, for example, and it may be 10 mm or less.

In the tire 10 of this embodiment, it is preferable that the long sides of the one sipe 6a and the other sipe 6b extend parallel to each other and the short sides of the one sipe 6a and the other sipe 6b extend parallel to each other. As illustrated in Figure 2, the long sides 61a and 61b extend parallel to each other and the short sides 62a and 62b extend parallel to each other. In addition, in the tire 10 of this embodiment, the one sipe 6a and the other sipe 6b are preferably arranged offset in the tire width direction. In Figure 2, the sipes 6a and 6b are arranged in such a way that, when viewed along the tire circumferential direction in the developed view of the tread surface 1, the sipes 6a and 6b overlap each other in a part in the tire width direction and are arranged in a phase shifted in the tire width direction (i.e., not overlapping in a part in the tire width direction).

By arranging the long sides and short sides of the sipes 6a and 6b in parallel each other, the distance between the long sides and the short sides can be kept constant in the tire circumferential direction and in the tire width direction, respectively, thus making it easy to form a uniform and high-density arrangement of the sipe units 60 in the block land portion 5 without creating unnecessary voids. In addition, by offsetting the one sipe 6a and the other sipe 6b in the tire width direction, when the sipe unit 60 is viewed along the tire circumferential direction in the developed view of the tread surface 1, the sipes will be present over a wider area in the tire width direction, compared to the case where the one sipe 6a and the other sipe 6b are not offset. This allows the braking and driving force due to the edge component to be fully exerted over a wider area in the tire width direction, and also allows for uniform distribution regarding the ground contact pressure in the block land portion 5.

In the tire 10 of this embodiment, the long sides 61a and 61b of the sipes 6a and 6b, respectively, are preferably extend at the inclination angles θ1 and θ2 of 0° or more and 45° or less with respect to the tire width direction, and more than 0° and less than 45° are more preferred. By setting the inclination angles θ1 and θ2 to 0° or more and 45° or less, the braking and driving force in the tire circumferential direction (front-back direction) due to the edge component on the long sides are fully demonstrated. By setting the inclination angles θ1 and θ2 to more than 0°, the edge effect can also be obtained in the tire width direction, and by setting the inclination angles θ1 and θ2 to less than 45°, the braking and driving force in the tire circumferential direction (front-back direction) due to the edge component on the long sides can be more fully demonstrated.

In the tire 10 of this embodiment, the angle θ3 between the long side 61a and the short side 62a of the one sipe 6a and the angle θ4 between the long side 61b and the short side 62b of the other sipe 6b, respectively, is 90° or more on the side where the one sipe 6a and the other sipe 6b face each other. According to this configuration, when a blade is used in the mold to form a sipe in the manufacturing process of the tire 10, since the short side of the blade provides more effective support for the long side against folding deformation that causes the long side of the blade to collapse, the bending rigidity of the blade can be increased more effectively to improve blade durability and tire productivity. Also, by setting the angles $\theta3$ and $\theta4$ to 90° or more, it is possible to prevent the formation of an acute corner in the land portion near the apex formed by the intersection of the long and short sides, i.e., the formation of a local low-rigidity portion, so that to control deformation around this portion, prevent the difference in ground contact pressure from increasing, and more effectively demonstrate braking and driving force in the tire circumferential direction.

In addition, the angles $\theta3$ and $\theta4$ are preferably 150° or less. By setting the angles $\theta3$ and $\theta4$ to 150° or less, a moderate bend is formed between the short and long sides, which improves the durability of the blade that forms the sipes during tire manufacturing, compared to when the angles are greater than 150°.

Further, in the tire 10 of this embodiment, in each of the one sipe 6a and the other sipe 6b, the short sides 62a and 62b extends along the tire circumferential direction. Note, that the term "extend along the tire circumferential direction" shall include cases where it is parallel to the tire circumferential direction or inclined at a very low angle with respect to the tire circumferential direction (e.g., inclined at an angle of 5° or less with respect to the tire circumferential direction). According to this configuration, sipes that can exert braking and driving force in response to inputs in the tire circumferential direction can be more efficiently arranged, and since the direction of the short sides approximately coincide with the input direction of the braking and driving forces, the block land portion is not divided with respect to the input direction and the reduction in rigidity of the land portion around the short sides can be more effectively controlled. In addition, according to this configuration, water that accumulates on the long sides of the sipes by removing the water film on the ice surface can be efficiently guided to the tire circumferential direction, which is the sliding direction during braking, by the short sides of the sipes provided at the end of the long sides, which extend along the tire circumferential direction, thereby promoting drainage.

Note, that when the short sides 62a and 62b extend along the tire circumferential direction, the angles $\theta3$ and $\theta4$ are preferably 90° or more and 135° or less, from the view point of forming an appropriate bend between the short side and the long side to more effectively improve the durability of the blade that forms the sipe during tire manufacturing, and ensuring that the edge component of the long side provides sufficient braking and driving forces in the tire circumferential direction (front-back direction). As mentioned above, by setting the inclination angle of the long sides with respect to the tire width direction to 0 to 45°, maximum effect can be achieved on the most important safety feature, the braking and driving performance. In order to maintain this angle while having the short side generally follow the tire circumferential direction, the bending angle between the long and short sides must be 90 to 135°. In the tire 10 of this embodiment, for example, the inclination angles $\theta1$ and $\theta2$ of the long sides 61a and 61b are 30°, and the angles $\theta3$ and $\theta4$ are 120°.

In the tire 10 of this embodiment, the one sipe 6a and the other sipe 6b are preferably congruent with each other. This configuration facilitates the uniform and high-density arrangement of the sipe units 60 in the block land portion 5. Here, "congruent" refers to congruence including mirror images, and means that they completely overlap each other due to parallel movement, rotational movement, and/or axisymmetric movement when viewed from the tread surface.

In the tire 10 of this embodiment, in each of the one sipe 6a and the other sipe 6b, the ratio of the length of the long sides 61a and 61b along the extending direction thereof to the length of the short sides 62a and 62b along the extending direction thereof is 1 to 15. In Figure 2, the ratio of the length L2 of the long side 61a along the extending direction thereof to the length L1 of the short side 62a along the extending direction thereof is preferably 1 to 15, and the ratio of the length L4 of the long side 61b along the extending direction thereof to the length L3 of the short side 62b along the extending direction thereof is preferably 1 to 15. According to this configuration, since the ratio of the length of the long side to the short side is 1 or more, an excessive decrease in sipe density or an excessive decrease in land rigidity can be controlled, and since the ratio of the length of the long side to the short side is 15 or less, the durability of the blades that form the sipes during tire manufacturing can be improved.

In the tire 10 of this embodiment, the lengths L2 and L4 of the long sides 61a and 61b along the extending direction thereof are not particularly limited, but from the viewpoint of maintaining the rigidity of the block land portion 5 while fully demonstrating on-ice performance in the tire, and of enabling application to various types of tires, they are preferably 3 to 15 mm.

In the tire 10 of this embodiment, the lengths L1 and L3 of the short sides 62a and 62b along the extending direction thereof are also not particularly limited, but from the viewpoint of more effectively improving the durability of the blade that forms the sipes during tire manufacturing, they are preferably 1 mm or more, and less than the value of the lengths L2 and L4 of the long sides 61a and 61b along the extending direction thereof.

In addition, in the tire 10 of this embodiment, the ratio of tire circumferential length L6 along the tire circumferential direction of the sipe unit 60 to tire widthwise length L5 along the tire width direction of the sipe unit 60 is preferably 0.1 to 2.6. Here, the "tire widthwise length along the tire width direction" is the tire widthwise length along a straight line parallel to the tire width direction, and in Figure 2, it refers to the distance between the end on the tire width direction WD2 side of the centerline C1 of the sipe 6a and the end on the tire width direction WD1 side of the centerline C2 of the sipe 6b. Also, the "circumferential length along the tire circumferential direction" is the tire circumferential length along a straight line parallel to the tire circumferential direction, and in Figure 2, it refers to the distance between the end on the tire circumferential direction CD1 side of the centerline C1 of the sipe 6a and the end on the tire circumferential direction CD2 side of the centerline C2 of the sipe 6b. When the value of this ratio is 0.1 or more, the circumferential distance between the sipes does not become too short, and block rigidity can be more fully ensured. Furthermore, when the value of this ratio is 2.6 or less, the inclination angles θ1 and θ2 of the long sides 61a and 61b do not become excessive or the length of the long sides 61a and 61b in the tire width direction becomes too short, and more sufficient effect on the braking and driving force can be obtained.

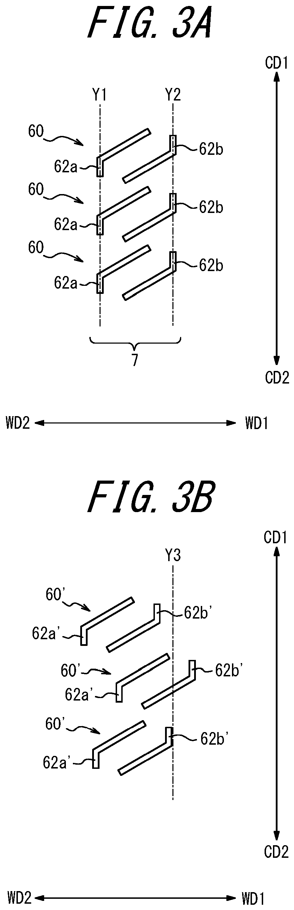

Figure 3A is an illustration for explaining an arrangement of the sipe unit 60 in Figure 1. In the tire 10 of this embodiment, when a plurality of sipe units 60 are arranged adjacent to each other in the tire circumferential direction to form a sipe unit row 7, as illustrated in Figure 3A, it is preferable that in the plurality (in the illustrated example, three) of sipe units 60 arranged in the sipe unit row 7, the plurality (in this example, all) of short sides 62a arranged adjacent to each other in the tire circumferential direction extend on a same straight line along the tire circumferential direction (in Figure 3A, on the hypothetical line Y1 along the tire circumferential direction), and the plurality (in this example, all) of short sides 62b arranged adjacent to each other in the tire circumferential direction extend on a same straight line along the tire circumferential direction (in Figure 3A, on the hypothetical line Y2 along the tire circumferential direction). As illustrated in Figure 3A, the adjacent sipe units 60 are spaced apart from each other and are arranged to face each other in the tire circumferential direction. Also, the "plurality of short sides 62a" and the "plurality of short sides 62b" above refer to all "short sides 62a" and "short sides 62b" contained within the sipe unit row 7 (in the illustrated example, there are three short sides 62a and three short sides 62b). According to this configuration, since the phases in the tire width direction of the plurality of sipe units 60 arranged adjacent to each other in the tire circumferential direction are aligned, it becomes easy to arrange a plurality of sipe units uniformly and at high density without forming unnecessary voids in the block land portion 5.

Figure 3B is an illustration for explaining an another example of an arrangement of sipe units 60. As illustrated in Figure 3B, when a plurality of sipe units 60' are arranged adjacent to each other in the tire circumferential direction, in the plurality of sipe units 60' arranged adjacent to each other in the tire circumferential direction, the plurality of short sides 62a' arranged adjacent to each other in the tire circumferential direction may each extend parallel to the hypothetical line Y3 extending along the tire circumferential direction and may be offset in the tire width direction. Together with that, the plurality of short sides 62b' arranged adjacent to each other in the tire circumferential direction may each extend parallel to the hypothetical line Y3 extending along the tire circumferential direction and may be offset in the tire width direction.

In the tire 10 of this embodiment, the number and density of the sipe units 60 arranged on each block land portion 5 is not particularly limited. As described above, in the example illustrated in Figure 1, 12 sipe units 60 are arranged in each of the block land portions 52, 53 and 54, and 6 sipe units 60 are arranged in each of the block land portions 51 and 55.

The total number of one sipe and the other sipe that comprise the sipe unit 60 arranged on a block land portion 5 may be determined based on, for example, the sipe density SD described below.

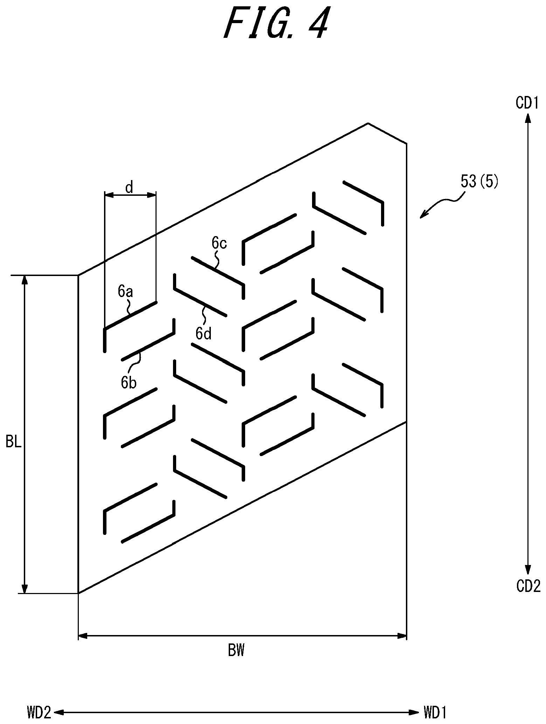

Hereinafter, a method for calculating the sipe density SD will be explained. Figure 4 is an enlarged view of one of the block land portions 53 in Figure 1. As illustrated in Figure 4, when the block land portion 53 in Figure 1 is a typical example of the block land portion 5: the total number of the sipes 6a (one sipe), 6b (the other sipe), 6c (one sipe) and 6d (the other sipe) in the block land portion 5 is n; the length of each of the sipes 6a, 6b, 6c, and 6d in the tire width direction is d (mm) (in Figure 4, the length of the sipe 6a in the tire width direction is illustrated as d); and the depth of sipes 6a, 6b, 6c, and 6d is h (mm); d × h can be 150 (mm$^2$) or less, for example. In addition, when the maximum length of the block land portion 5 in the tire width direction is BW (mm), the number of equivalent sipes N is expressed as d × n/BW. Here, the number of equivalent sipes N is the number of sipes 6a, 6b, 6c, and 6d in this embodiment when converted to transverse sipes (equivalent sipes) that are provided to completely cross the block land portion 5. Furthermore, when the equivalent length of the land portion in the tire circumferential direction is BL (mm), which is obtained by dividing the outer contour area of the block land portion 5 (mm$^2$) by the aforementioned BW (mm), the average sipe spacing is expressed as BL/(N + 1). Here, the average sipe spacing is the spacing of the equivalent sipes in the tire circumferential direction in the block land portion 5 when the sipes 6a, 6b, 6c, and 6d in this embodiment are converted to the equivalent sipes. The sipe density SD is expressed as the inverse of the average sipe spacing by the following equation.

$$\mathrm{SD} = (N + 1)/\mathrm{BL} = ((d \times n/\mathrm{BW}) + 1)/\mathrm{BL} \dots (\text{Equation } 1)$$

Note, that the total number of the sipes in the block land portion n, the length of each of the above sipes in the tire width direction d, the maximum length of the block land portion in the tire width direction BW, and the outer contour area of the block land portion are the values measured in the developed view of the tread surface. The "outer contour area" of the block land portion means the area enclosed by the outer contour of the block land portion in the developed view of the tread surface, and therefore, even if non-ground contact portions such as sipes, small holes, narrow grooves, etc. are disposed within the block land portion, the area that does not exclude the area of the sipes, small holes, narrow grooves, etc. are considered.

A plurality of sipes 6a, 6b, 6c and 6d are arranged in the block land portion 5 so that the sipe density SD is 0.15 or more. This allows the sipe density to be increased while preventing a reduction in the rigidity of the land portion, thereby more effectively improving the on-ice gripping performance of the tire.

EXAMPLES

Examples of the present invention will be described below.

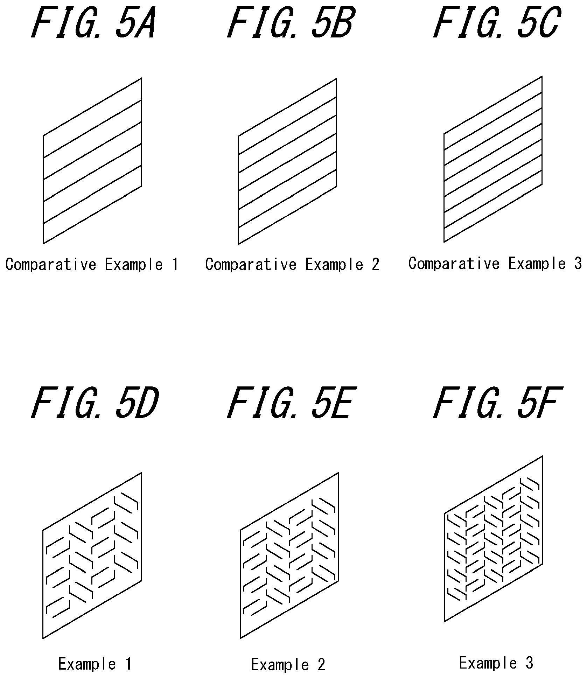

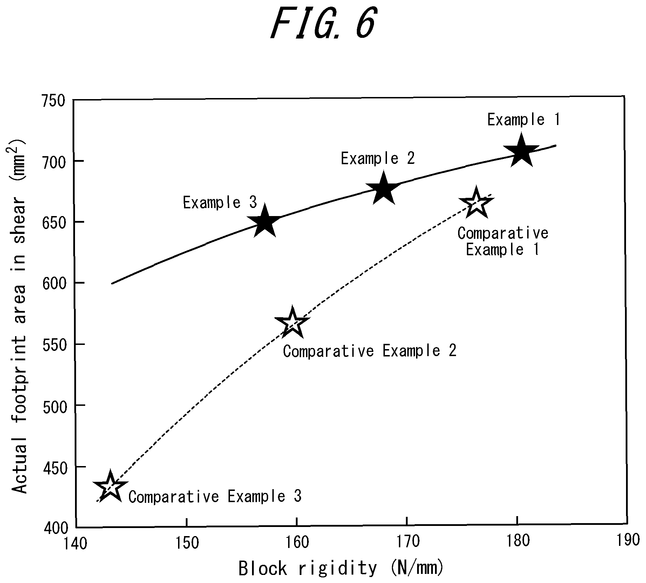

The effect on controlling lifting on a footprint of the test tires 1 to 6 (Comparative Examples 1 to 3 and Examples 1 to 3) was calculated by the Finite Element Method (FEM). Each test tire has the block land portions illustrated in Table 1 and Figures 5A to 5F on the tread surface, respectively. The results in the Comparative Examples and Examples presented in Table 1 and Figure 5 are provided graphically in Figure 6. As provided in Figure 6, the horizontal axis of the graph is the block rigidity (N/mm), and the vertical axis of the graph is the actual footprint area in shear (mm$^2$).

The predictive calculations by FEM were performed under the condition of applying a vertical load which is obtained by multiplying the outer contour area of the block land portion by a standard ground pressure for passenger vehicle tires of 230 kPa, and thereby evaluating the block rigidity and footprint area.

For the block rigidity, the shear input value in the tire circumferential direction when the lateral displacement in the same direction was 1 mm, was determined; and for the actual footprint area, the residual footprint area with partial lifting when the shear input in the tire circumferential direction was 0.3 times the above vertical load, was determined.

According to the results in Figure 6, it can be seen that: even if the number of sipes and thus the sipe density are the same (between Comparative Example 1 and Example 1, Comparative Example 2 and Example 2, and Comparative Example 3 and Example 3, respectively), the block rigidity and the actual footprint area are greater in the Examples, which in turn has a greater effect on the control of lifting on the footprint of the block land portion, and resulting in improved on-ice gripping performance.

[Table 1]

|  | Test tire (Comparative Example 1) | Test tire (Comparative Example 2) | Test tire (Comparative Example 3) | Test tire (Example 1) | Test tire (Example 2) | Test tire (Example 3) |
|---|---|---|---|---|---|---|
| Sipe shape | FIG. 5A | FIG. 5B | FIG. 5C | FIG. 5D | FIG. 5E | FIG. 5F |
| Average sipe spacing | 6mm | 5mm | 4.29mm | 6mm | 5mm | 4.29mm |
| Sipe density | 0.167/mm | 0.2/mm | 0.23/mm | 0.167/mm | 0.2/mm | 0.23/mm |
| Sipe width | 0.5mm | 0.5mm | 0.5mm | 0.5mm | 0.5mm | 0.5 mm |
| Sipe depth | 6.7mm | 6.7mm | 6.7mm | 6.7mm | 6.7mm | 6.7mm |
| Number of sipes | 4 | 5 | 6 | Equivalent to 4 | Equivalent to 5 | Equivalent to 6 |

INDUSTRIAL APPLICABILITY

The pneumatic tires of the present disclosure can be used for any type of pneumatic tire, but can suitably be used for passenger vehicle tires or truck/bus tires, and even more suitably for winter passenger vehicle tires or winter truck/bus tires.

REFERENCE SIGNS LIST

1 Tread surface

2, 2a, 2b, 2c, 2d Circumferential main groove

3, 3a, 3b, 3c, 3d, 3e Land portion

4, 41, 42, 43, 44, 45 Lateral grooves

5, 51, 52, 53, 54, 55 Block land portion

6a Sipe (one sipe)

6b Sipe (the other sipe)

6c Sipe (one sipe)

6d Sipe (the other sipe)

7 Sipe row

10 Tire

60, 60' Sipe unit

61a, 61b Long side

62a, 62a', 62b, 62b': Short side

C1, C2 Center line

WD1, WD2 Tire width direction

CD1, CD2 Tire circumferential direction

TE Tread edge

Y1, Y2, Y3 hypothetical line

d Length of sipe in the tire width direction

**Claims**

1. A tire (10) having at least one land portion (3) on a tread surface (1) of the tire (10), wherein

   at least one of the land portions (3) comprises at least one sipe unit (60) consisting of a pair of sipes (6a, 6b), both ends of each of one sipe (6a) and the other sipe (6b) constituting the pair of sipes terminates in the land portion (3),
   the one sipe (6a) and the other sipe (6b) are arranged opposing each other in the tire circumferential direction (CD1, CD2) and have long sides (61a, 61b) extending in the tire width direction (WD1, WD2), respectively,
   the one sipe (6a) has a short side (62a) extending from either end (e1) of the long side (61a) in the tire width direction (WD1, WD2) to approach the other sipe (6b) side,
   the other sipe (6b) has a short side (62b) extending from the other end (e2) of the long side (61b) in the tire width direction (WD1, WD2) to approach the one sipe (6a) side,
   wherein in each of the one sipe (6a) and the other sipe (6b), an angle between the long side (61a, 61b) and the short side (62a, 62b) is 90° or more on the side where the one sipe (6a) and the other sipe (6b) face each other,
   wherein in each of the one sipe (6a) and the other sipe (6b), the short side (62a, 62b) extends along the tire circumferential direction (CD1, CD2) such that the short side (62a, 62b) is parallel to the tire circumferential direction (CD1, CD2) or inclined at an angle of 5° or less with respect to the tire circumferential direction (CD1, CD2), **characterized in that**

a sipe density, SD, in a block land portion (5) of the land portion (3) is 0.15 or more, wherein
the sipe density SD is defined by the equation SD = ((d × n/BW) + 1)/BL, where d is a length of the sipes (6a, 6b), n is a total number of sipes (6a, 6b) in the block land portion (5), BW is a maximum length of the block land portion (5) in the tire width direction (WD1, WD2), and BL is an equivalent length of the block land portion (5) in the tire circumferential direction (CD1, CD2).

2. The tire (10) according to claim 1, wherein the long sides (61a, 61b) of the one sipe (6a) and the other sipe (6b) extend parallel to each other and the short sides (62a, 62b) of the one sipe (6a) and the other sipe (6b) extend parallel to each other, and the one sipe (6a) and the other sipe (6b) are arranged offset in the tire width direction (WD1, WD2).

3. The tire (10) according to any one of claims 1 or 2, wherein the one sipe (6a) and the other sipe (6b) are congruent with each other.

4. The tire (10) according to any one of claims 1 to 3, wherein in each of the one sipe (6a) and the other sipe (6b), the ratio of length of the long side (61a, 61b) along the extending direction thereof to length of the short side (62a, 62b) along the extending direction thereof is 1 to 15.

5. The tire (10) according to any one of claims 1 to 4, wherein the ratio of tire circumferential length along the tire circumferential direction (CD1, CD2) of the sipe unit (60) to tire widthwise length along the tire width direction (WD1, WD2) of the sipe unit is 0.1 to 2.6.

6. The tire (10) according to any one of claims 1 to 5, wherein a plurality of the sipe units (60) are arranged adjacent to each other in the tire circumferential direction (CD1, CD2) to form a sipe unit row (7), and
in the plurality of the sipe units (60) in the sipe unit row (7), the short sides (62a) of a plurality of the one sipe (6a) of a plurality of the pair of sipes (6a, 6b) extend on a same straight line along the tire circumferential direction CD1, CD2), and the short sides (62b) of a plurality of the other sipe (6b) of a plurality of the pair of sipes (6a, 6b) extend on a same straight line along the tire circumferential direction (CD1, CD2).

**Patentansprüche**

1. Reifen (10), der mindestens einen Flächenabschnitt (3) auf einer Lauffläche (1) des Reifens (10) aufweist, wobei

mindestens einer der Flächenabschnitte (3) mindestens eine Lamelleneinheit (60) umfasst, die aus einem Paar Lamellen (6a, 6b) besteht,
beide Enden jeder einer Lamelle (6a) und der anderen Lamelle (6b), die das Paar Lamellen bilden, im Flächenabschnitt (3) enden,
die eine Lamelle (6a) und die andere Lamelle (6b) einander in der Reifenumfangsrichtung (CD1, CD2) gegenüber angeordnet sind und jeweils lange Seiten (61a, 61b) aufweisen, die sich in der Reifenbreitenrichtung (WD1, WD2) erstrecken,
die eine Lamelle (6a) eine kurze Seite (62a) aufweist, die sich von einem Ende (e1) der langen Seite (61a) in der Reifenbreitenrichtung (WD1, WD2) erstreckt, um sich der Seite der anderen Lamelle (6b) anzunähern,
die andere Lamelle (6b) eine kurze Seite (62b) aufweist, die sich von dem anderen Ende (e2) der langen Seite (61b) in der Reifenbreitenrichtung (WD1, WD2) erstreckt, um sich der Seite der einen Lamelle (6a) anzunähern,
wobei in jeder der einen Lamelle (6a) und der anderen Lamelle (6b) ein Winkel zwischen der langen Seite (61a, 61b) und der kurzen Seite (62a, 62b) auf der Seite, auf der die eine Lamelle (6a) und die andere Lamelle (6b) einander gegenüberliegen, 90° oder mehr beträgt,
wobei in jeder der einen Lamelle (6a) und der anderen Lamelle (6b) die kurze Seite (62a, 62b) sich entlang der Reifenumfangsrichtung (CD1, CD2) erstreckt, so dass die kurze Seite (62a, 62b) parallel zur Reifenumfangsrichtung (CD1, CD2) oder in einem Winkel von 5° oder weniger zur Reifenumfangsrichtung (CD1, CD2) geneigt ist, **dadurch gekennzeichnet, dass**
eine Lamellendichte, SD, in einem Blocklamellenabschnitt (5) des Flächenabschnitts (3) 0,15 oder mehr beträgt, wobei
die Lamellendichte SD durch die Gleichung SD = ((d × n/BW) + 1)/BL definiert ist, wobei d eine Länge der Lamellen (6a, 6b) ist, n eine Gesamtzahl der Lamellen (6a, 6b) in dem Blocklamellenabschnitt (5) ist, BW eine maximale Länge des Blocklamellenabschnitts (5) in der Reifenbreitenrichtung (WD1, WD2) ist und BL eine äquivalente Länge des Blocklamellenabschnitts (5) in der Reifenumfangsrichtung (CD1, CD2) ist.

2. Reifen (10) nach Anspruch 1, wobei die langen Seiten (61a, 61b) der einen Lamelle (6a) und der anderen Lamelle (6b) parallel zueinander verlaufen und die kurzen Seiten (62a, 62b) der einen Lamelle (6a) und der anderen Lamelle (6b) parallel zueinander verlaufen, und die eine Lamelle (6a) und die andere Lamelle (6b) in der Reifenbreitenrichtung (WD1, WD2) versetzt angeordnet sind.

3. Reifen (10) nach einem der Ansprüche 1 oder 2, wobei die eine Lamelle (6a) und die andere Lamelle (6b) zueinander kongruent sind.

4. Reifen (10) nach einem der Ansprüche 1 bis 3, wobei in jeder der einen Lamelle (6a) und der anderen Lamelle (6b) das Verhältnis der Länge der langen Seite (61a, 61b) entlang der Erstreckungsrichtung davon zur Länge der kurzen Seite (62a, 62b) entlang der Erstreckungsrichtung davon 1 zu 15 beträgt.

5. Reifen (10) nach einem der Ansprüche 1 bis 4, wobei das Verhältnis der Reifenumfangslänge entlang der Reifenumfangsrichtung (CD1, CD2) der Lamelleneinheit (60) zur Reifenbreitenlänge entlang der Reifenbreitenrichtung (WD1, WD2) der Lamelleneinheit 0,1 bis 2,6 beträgt.

6. Reifen (10) nach einem der Ansprüche 1 bis 5, wobei eine Vielzahl der Lamelleneinheiten (60) benachbart zueinander in der Reifenumfangsrichtung (CD1, CD2) angeordnet sind, um eine Lamelleneinheitenreihe (7) zu bilden, und in der Vielzahl der Lamelleneinheiten (60) in der Lamelleneinheitenreihe (7) die kurzen Seiten (62a) einer Vielzahl der einen Lamelle (6a) einer Vielzahl des Paars von Lamellen (6a, 6b) auf einer gleichen geraden Linie entlang der Reifenumfangsrichtung (CD1, CD2) verlaufen und die kurzen Seiten (62b) einer Vielzahl der anderen Lamelle (6b) einer Vielzahl des Paars von Lamellen (6a, 6b) auf einer gleichen geraden Linie entlang der Reifenumfangsrichtung (CD1, CD2) verlaufen.

**Revendications**

1. Pneu (10) présentant au moins une partie de contact (3) sur une bande de roulement (1) du pneu (10), dans lequel

au moins une des parties de contact (3) comprend au moins une unité de lamelle (60) consistant en une paire de lamelles (6a, 6b),
les deux extrémités de chacune d'une lamelle (6a) et de l'autre lamelle (6b) constituant la paire de lamelles se terminent dans la partie de contact (3),
la lamelle (6a) et l'autre lamelle (6b) sont agencées face à face dans la direction circonférentielle du pneu (CD1, CD2) et présentent des côtés longs (61a, 61b) s'étendant dans la direction de la largeur du pneu (WD1, WD2), respectivement,
l'une des lamelles (6a) présente un côté court (62a) s'étendant de chaque extrémité (e1) du côté long (61a) dans le sens de la largeur du pneu (WD1, WD2) pour s'approcher du côté de l'autre lamelle (6b),
l'autre lamelle (6b) présente un côté court (62b) s'étendant de l'autre extrémité (e2) du côté long (61b) dans la direction de la largeur du pneu (WD1, WD2) pour s'approcher d'un côté de la lamelle (6a),
dans lequel, dans chacune d'une lamelle (6a) et de l'autre lamelle (6b), un angle entre le côté long (61a, 61b) et le côté court (62a, 62b) est de 90° ou plus du côté où la lamelle (6a) et l'autre lamelle (6b) se font face,
dans lequel, dans chacune de la lamelle (6a) et de l'autre lamelle (6b), le côté court (62a, 62b) s'étend le long de la direction circonférentielle du pneu (CD1, CD2) de sorte que ce côté court (62a, 62b) soit parallèle à la direction circonférentielle du pneu (CD1, CD2) ou incliné d'un angle de 5° ou moins par rapport à cette direction, **caractérisé en ce que**
une densité de lamelle, SD, dans une partie de contact de bloc (5) de la partie de contact (3) est de 0,15 ou plus, dans laquelle
la densité de lamelle SD est définie par l'équation SD = ((d × n/BW) + 1)/BL, où d est une longueur des lamelles (6a, 6b), n est un nombre total de lamelles (6a, 6b) dans la partie de contact de bloc (5), BW est une longueur maximale de la partie de contact de bloc (5) dans la direction de la largeur du pneu (WD1, WD2), et BL est une longueur équivalente de la partie de contact de bloc (5) dans la direction circonférentielle du pneu (CD1, CD2).

2. Pneu (10) selon la revendication 1, dans lequel les longs côtés (61a, 61b) d'une lamelle (6a) et de l'autre lamelle (6b) s'étendent parallèlement l'un à l'autre et les côtés courts (62a, 62b) d'une lamelle (6a) et de l'autre lamelle (6b) s'étendent parallèlement l'un à l'autre, et la lamelle (6a) et l'autre lamelle (6b) sont agencées de manière décalée dans le sens de la largeur du pneu (WD1, WD2).

3. Pneu (10) selon l'une quelconque des revendications 1 ou 2, dans lequel la lamelle (6a) et l'autre lamelle (6b) sont congruentes l'une avec l'autre.

4. Pneu (10) selon l'une quelconque des revendications 1 à 3, dans lequel dans chacune d'une lamelle (6a) et de l'autre lamelle (6b), le rapport de la longueur du côté long (61a, 61b) dans le sens de son extension à la longueur du côté court (62a, 62b) dans le sens de son extension est de 1 à 15.

5. Pneu (10) selon l'une quelconque des revendications 1 à 4, dans lequel le rapport de la longueur circonférentielle du pneu dans la direction circonférentielle du pneu (CD1, CD2) de l'unité de lamelles (60) à la longueur en largeur du pneu dans la direction de largeur du pneu (WD1, WD2) de l'unité de lamelles est de 0,1 à 2,6.

6. Pneu (10) selon l'une quelconque des revendications 1 à 5, dans lequel une pluralité d'unités de lamelles (60) sont agencées côte à côte dans le sens circonférentiel du pneu (CD1, CD2) pour former une rangée d'unités de lamelles (7), et

dans la pluralité des unités de lamelles (60) dans la rangée d'unités de lamelles (7), les côtés courts (62a) d'une pluralité de l'une des lamelles (6a) d'une pluralité de la paire de lamelles (6a, 6b) s'étendent sur une même ligne droite le long de la direction circonférentielle du pneu (CD1, CD2), et les côtés courts (62b) d'une pluralité de l'autre lamelle (6b) d'une pluralité de la paire de lamelles (6a, 6b) s'étendent sur une même ligne droite le long de la direction circonférentielle du pneu (CD1, CD2).

*FIG. 1*

FIG. 2

# FIG. 3A

# FIG. 3B

# FIG. 4

## FIG. 5A

Comparative Example 1

## FIG. 5B

Comparative Example 2

## FIG. 5C

Comparative Example 3

## FIG. 5D

Example 1

## FIG. 5E

Example 2

## FIG. 5F

Example 3

FIG. 6

EP 4 424 522 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06191234 A
- JP 2011245903 A
- JP 2010052683 A
- JP 2000289413 A
- US 3749145 A
- JP S5211084 B
- US 2002007889 A1
- JP 2021165110 A
- WO 2022050287 A1
- JP 2011245963 A
- JP 2005186827 A